# EUROPÄISCHE PATENTSCHRIFT

(11) **EP 3 880 415 B1**
(45) Veröffentlichungstag und Bekanntmachung des Hinweises auf die Patenterteilung: **07.05.2025**
(21) Anmeldenummer: 19797252.4
(22) Anmeldetag: 30.10.2019
(51) Int. Cl.: B25J 13/06, G09F 9/30, G06F 3/0488

(54) **ROBOTERARM MIT EINER MENSCH-MASCHINE-SCHNITTSTELLE**
ROBOTIC ARM COMPRISING A HUMAN-MACHINE INTERFACE
BRAS ROBOTISÉ COMPRENANT UNE INTERFACE HOMME-MACHINE

(30) Priorität: 12.11.2018 DE 102018219268
(43) Veröffentlichungstag der Anmeldung: 22.09.2021
(73) Patentinhaber: KUKA Deutschland GmbH, 86165 Augsburg (DE)
(72) Erfinder: TSCHARNUTER, Dietmar, 86316 Friedberg (DE)
(74) Vertreter: Oelke, Jochen
(86) Internationale Anmeldenummer: PCT/EP2019/079602
(87) Internationale Veröffentlichungsnummer: WO 2020/099129

(56) Entgegenhaltungen:
- EP-A1- 3 147 752
- DE-A1- 102014 107 642
- DE-A1- 19 928 519
- DE-B3- 102015 117 211
- US-A1- 2008 147 239

## Beschreibung

Die Erfindung betrifft einen Roboterarm, aufweisend mehrere Gelenke und mehrere Glieder, die jeweils zwei benachbarte Gelenke miteinander verbinden, wobei mindestens eines dieser Glieder eine Mensch-Maschine-Schnittstelle aufweist, umfassend wenigstens ein Anzeigemittel, das ausgebildet ist, wenigstens einen Systemzustand des Roboterarms und/oder einer mit dem Roboterarm steuerungstechnisch verbundenen Steuervorrichtung anzuzeigen und umfassend wenigstens ein Eingabemittel, das ausgebildet ist, wenigstens eine manuelle Eingabe über die Mensch-Maschine-Schnittstelle dem Roboterarm und/oder einer mit dem Roboterarm steuerungstechnisch verbundenen Steuervorrichtung zuzuführen.

Aus der EP 1 566 246 A1 ist ein Roboter bekannt, mit einer Anzeigevorrichtung, die es einem Bediener ermöglicht, auf Informationen Bezug zu nehmen, die für Inspektionen oder dergleichen erforderlich sind, ohne ein gedrucktes Handbuch oder einen Anzeigebildschirm eines Lehrpendants verwenden zu müssen. Die Anzeigevorrichtung weist einen flexiblen Bildschirm auf, der organische Leuchtdioden, eine Steuereinheit und einen Stecker aufweist. Der Anzeigevorrichtungsstecker wird in einen Verbinder eingeführt, der an einer geeigneten Stelle an dem Roboterarm vorgesehen ist, wobei die Anzeigeeinheit leicht auf die Oberfläche des Roboterarms gedrückt wird. Die Oberfläche des Roboterarms kann dabei gekrümmt oder flach sein.

Aus der DE 10 2014 107642 A1 ist ein Manipulator bekannt, der eine Mensch-Maschinen-Schnittstelle mit einem Touchscreen aufweist.

Aus der DE 10 2015 117211 B3 ist ein Roboterarm bekannt, der über mehrere aktorisch antreibbare Gelenkverbindungen verfügt. Ein freies Ende eines Fortsatzes eines Armglieds des Roboterarms weist Eingabeelemente auf.

Aus der DE 199 28 519 A1 ist bekannt, dass eine Displayeinrichtung an einem dreidimensionalen Koordinaten-Meßsystem vorgesehen ist.

Aus der EP 3 147752 A1 ist ein User-Interface für einen Roboter bekannt, wobei sich das User-Interface auf der Oberfläche des Roboters erstrecken.

Aus der US 2008/147239 A1 ist eine Vorrichtung bekannt, welche an einer Oberfläche Informationen anzeigt, wobei die Vorrichtung selbst ein flexibles Display ist.

Aufgabe der Erfindung ist es, einen Roboterarm mit einer Mensch-Maschine-Schnittstelle zu schaffen, der in besonders ergonomischer Weise bedient, insbesondere manuell angesteuert werden kann.

Diese Aufgabe wird erfindungsgemäß gelöst durch einen Roboterarm nach Anspruch 1.

Im Allgemeinen umfasst ein Roboter einen Roboterarm, d.h. die sogenannte Kinematik, und eine den Roboterarm steuernde Steuervorrichtung, d.h. eine Robotersteuerung. Die Robotersteuerung kann neben ihrer Funktionalität zum Ansteuern der Bewegungen des Roboterarms noch weitere ergänzende Steuerungskomponenten oder Steuerungsfunktionalitäten aufweisen. Diese weiteren ergänzenden Steuerungskomponenten oder Steuerungsfunktionalitäten können die Konfigurationsvorrichtung der erfindungsgemäßen Mensch-Maschine-Schnittstelle und/oder die Auswertevorrichtung der erfindungsgemäßen Mensch-Maschine-Schnittstelle sein. Die erfindungsgemäße Konfigurationsvorrichtung und/oder die erfindungsgemäße Auswertevorrichtung können jedoch separat von der Robotersteuerung ausgebildet sein. Die erfindungsgemäße Konfigurationsvorrichtung und/oder die erfindungsgemäße Auswertevorrichtung können insbesondere Teil der Baueinheit der Mensch-Maschine-Schnittstelle sein. Die erfindungsgemäße Konfigurationsvorrichtung und/oder die erfindungsgemäße Auswertevorrichtung können demgemäß beispielsweise außerhalb des Roboterarms angeordnet sein oder Teil des Roboterarms sein, d.h. insbesondere innerhalb des Roboterarms angeordnet sein.

Die Mensch-Maschine-Schnittstelle stellt eine Benutzerschnittstelle dar, mit der eine Person mit dem Roboter bzw. mit dessen Robotersteuerung in Kommunikation treten kann. Die Kommunikation kann unidirektional sein oder bidirektional. Die Kommunikation - in die eine Richtung - kann darin bestehen, dass der Roboter oder die Robotersteuerung der Person einen bestimmten Zustand des Roboters bzw. dessen Robotersteuerung mitteilt. Dies kann über wenigstens ein Anzeigemittel erfolgen. Das Anzeigemittel kann im einfachsten Falle ein Leuchtmittel sein, welches aufleuchtet, sobald ein bestimmter zugeordneter Zustand eintritt. Die Kommunikation - in die andere Richtung - kann darin bestehen, dass die Person eine Eingabe tätigt, um dem Roboter bzw. der Robotersteuerung einen Befehl oder eine gewünschte Zustandsänderung für den Roboter oder die Robotersteuerung mitteilt. Dies kann über wenigstens ein Eingabemittel erfolgen. Das Eingabemittel kann im einfachsten Falle ein Taster oder ein Schalter sein, bei dessen manueller Betätigung der Roboter bzw. die Robotersteuerung einen bestimmten Zustandswechsel vollzieht. Dies kann beispielsweise schon ein Einschalten oder Ausschalten des Roboters sein.

Im Falle der vorliegenden Erfindung können verschiedene Anzeigemittel vorgesehen sein. Gewisse Anzeigemittel können gemäß dem Stand der Technik ausgebildet sein und lediglich gewisse Systemzustände anzeigen. Im Speziellen wird zumindest ein Anzeigemittel erfindungsgemäße dazu verwendet, um einen Teilflächenabschnitt einer taktilen Sensorfläche des Roboterarms optisch hervorzuheben, um einer Person optisch anzuzeigen, dass genau dieser Teilflächenabschnitt der taktilen Sensorfläche als ein Eingabemittel aktiviert ist, so dass durch Betätigen dieses Teilflächenabschnitts der taktilen Sensorfläche eine Eingabe getätigt werden kann. Der gewünschte, d.h. als Eingabemittel aktivierte Teilflächenabschnitt der taktilen Sensorfläche kann durch das erfindungsgemäße Anzeigemittel direkt beleuchtet werden oder indirekt beleuchtet werden.

Manuelle Eingaben an der Mensch-Maschine-Schnittstelle können durch eine Person getätigt werden, indem das Eingabemittel beispielsweise mittels eines Fingers der Hand der Person gedrückt wird, wobei der manuell aufgebrachte Druck an dem Eingabemittel beispielsweise in eine elektrisches Signal umgewandelt wird, das der Auswertevorrichtung oder der Robotersteuerung zugeleitet wird, wobei die Auswertevorrichtung oder der Robotersteuerung eingerichtet ist, aufgrund des Signals einen bestimmten zugeordneten Systemzustand herzustellen.

Ein repräsentativer Vorgang ist beispielsweise die Auswahl und Aktivierung einer bestimmten Achse des Roboterarms d.h. eines bestimmten Gelenks des Roboterarms das manuell gesteuert jedoch motorisch angetrieben bewegt werden soll durch ein erstes Eingabemittel. Mittels wenigstens eines zweiten Eingabemittels kann dann dieses ausgewählte und aktivierte Gelenks des Roboterarms bewegt werden, indem beispielsweise entweder eine Plus-Taste durch die Person manuell gedrückt wird oder eine Minus-Taste durch die Person manuell gedrückt wird, um dieses Gelenk des Roboterarms, das insbesondere ein Drehgelenk sein kann, motorisch angetrieben, jedoch manuell gesteuert, im Uhrzeigersinn oder entgegen dem Uhrzeigersinn zu bewegen.

Die äußere Mantelwand des betreffenden Gliedes, welches die erfindungsgemäße Mensch-Maschine-Schnittstelle aufweist, kann eine Gehäuseschale des betreffenden Gliedes sein. Die äußere Mantelwand des betreffenden Gliedes kann die Außenwand eines Tragstukturbauteils des Gliedes sein. Die äußere Mantelwand des betreffenden Gliedes kann jedoch auch eine sonstige Blende, eine Verkleidung oder eine Haltevorrichtung sein, soweit diese ausgebildet ist, die Mensch-Maschine-Schnittstelle durch eine Person von außerhalb des Roboterarms zugänglich zu machen.

Die taktile Sensorfläche kann ausgebildet sein, sich lediglich über einen Teil der Gesamtoberfläche des betreffenden Gliedes des Roboterarms zu erstrecken. Die taktile Sensorfläche kann jedoch ausgebildet sein, sich zumindest weitgehend oder vollständig über die Gesamtoberfläche des betreffenden Gliedes des Roboterarms zu erstrecken. Die taktile Sensorfläche ist erfindungsgemäß neben ihrer erfindungsgemäßen Funktionalität als Teil einer Mensch-Maschine-Schnittstelle darüber hinaus in einer Funktionalität zur Kollisionserkennung des Roboterarms mit einem anderen Objekt eingerichtet d.h. konfiguriert. Dies bedeutet, dass die erfindungsgemäße taktile Sensorfläche in einer spezifischen Ausführungsform wahlweise sowohl als Teil der Mensch-Maschine-Schnittstelle als auch als Teil eines Kollisionserkennungssystems verwendet werden kann.

Die taktile Sensorfläche ist erfindungsgemäß zumindest dazu ausgebildet und eingerichtet, ein In-Kontakt-Treten beispielsweise einer Hand, eines Fingers oder eines anderen Körperteils einer Person mit dem Roboterarm an der entsprechend konfigurierten Stelle, d.h. an dem Teilflächenabschnitt, erfassen d.h. automatisch wahrnehmen zu können. Beispielsweise kann die taktile Sensorfläche aus einer Vielzahl von flächig verteilt angeordneter Drucksensoren aufgebaut sein. Die Drucksensoren sind dabei ausgebildet, einwirkende Kräfte zu erfassen, ggf. auch hinsichtlich ihrer Größe zu messen.

Alternativ kann die taktile Sensorfläche jedoch gegebenenfalls auch drucklos bzw. annähernd drucklos arbeiten, beispielsweise in dem Falle, wenn die taktile Sensorfläche aus einer Vielzahl von flächig verteilt angeordneter kapazitiven Sensoren aufgebaut ist. In diesem Falle kann eine entsprechende Änderung der Kapazität der kapazitiven Sensoren bereits dann wahrgenommen werden, wenn beispielsweise eine Hand, ein Finger oder ein anderes Körperteil der Person die taktile Sensorfläche nur leicht berührt, ohne dabei einen nennenswerten Druck auszuüben. Dennoch wird im Rahmen der Erfindung von einer Druckkraft gesprochen, auch wenn diese "Druckkraft" nahezu oder vollständig "null" sein kann.

Im Rahmen der Erfindung beispielsweise einsetzbare taktile Sensorflächen können z.B. gemäß EP 2 528 234 B1 ausgebildet sein.

Das Merkmal der überlagerten Anordnung von Anzeigefläche und taktiler Sensorfläche kann vorzugsweise derart erfolgen, dass die Anzeigefläche als ein dünner Schichtkörper ausgebildet ist, der auf die taktile Sensorfläche aufgelegt oder in Art eines Sandwich-Aufbaus mit der taktilen Sensorfläche verbunden ist. Es ist auch möglich, dass im Falle einer (teil-) durchsichtigen bzw. (teil-)transparenten Ausbildung der taktilen Sensorfläche die Anzeigefläche hinter der taktilen Sensorfläche angeordnet sein kann. Gegebenenfalls kann in einer speziellen Ausführung die Anzeigefläche auch neben der taktilen Sensorfläche angeordnet sein, sofern die Anzeigefläche bzw. das Anzeigemittel geeignet ist, den gewünschten Teilflächenabschnitt der taktilen Sensorfläche zu beleuchten.

Unter Beleuchten der taktilen Sensorfläche ist im allgemeinen zu verstehen, dass das Anzeigemittel ausgebildet und eingerichtet ist, den gewünschten Teilflächenabschnitt der taktilen Sensorfläche optisch hervorzuheben. Dies bedeutet vorrangig, dass das Anzeigemittel den Teilflächenabschnitt der taktilen Sensorfläche ausleuchtet. In speziellen Abwandlungen kann ein optisches Hervorheben jedoch beispielsweise auch dadurch erreicht werden, dass der gewünschte Teilflächenabschnitt der taktilen Sensorfläche dadurch hervorgehoben wird, dass nicht dieser Teilflächenabschnitt direkt angestrahlt wird, sondern beispielsweise der Teilflächenabschnitt durch eine rahmenartige Umrandung des Teilflächenabschnitts, die durch das Beleuchten mittels dem Anzeigemittel erzeugt wird, optisch herausgestellt wird. Es ist auch die Umkehrung möglich, nämlich dass die annähernd gesamte taktile Sensorfläche durch das Anzeigemittel beleuchtet wird und nur der gewünschte und aktivierte Teilflächenabschnitt der taktilen Sensorfläche unbeleuchtet gelassen wird.

Die Konfigurationsvorrichtung kann ausgebildet sein zum dynamischen Beleuchten wahlweise eines ersten Teilflächenabschnitts der taktilen Sensorfläche oder eines vom ersten Teilflächenabschnitt verschiedenen zweiten Teilflächenabschnitts der taktilen Sensorfläche.

Indem die Konfigurationsvorrichtung ausgebildet ist zum dynamischen Beleuchten wahlweise eines ersten Teilflächenabschnitts der taktilen Sensorfläche oder eines vom ersten Teilflächenabschnitt verschiedenen zweiten Teilflächenabschnitts der taktilen Sensorfläche, kann ein bestimmtes Eingabemittel wahlweise an verschiedenen Stellen der Oberfläche des betreffende Gliedes des Roboterarms funktionsfähig dargestellt werden. Weisen mehrere Glieder des Roboterarms taktile Sensorflächen und Anzeigemittel auf, so kann das bestimmte Eingabemittel wahlweise an dem einen Glied oder an einem der anderen Glieder funktionsfähig dargestellt werden.

Die Konfigurationsvorrichtung kann demgemäß ausgebildet sein den wahlweise ersten Teilflächenabschnitt der taktilen Sensorfläche oder den wahlweise zweiten Teilflächenabschnitt der taktilen Sensorfläche mit einer gleichartigen Darstellung zu beleuchten, bei dessen Berührung steuerungstechnisch das gleiche Signal erzeugt wird, um in beiden dynamischen Konfigurationen dieselbe Funktion zu aktivieren.

Indem die Konfigurationsvorrichtung ausgebildet ist zum dynamischen Beleuchten wahlweise eines ersten Teilflächenabschnitts der taktilen Sensorfläche oder eines vom ersten Teilflächenabschnitt verschiedenen zweiten Teilflächenabschnitts der taktilen Sensorfläche, kann jedoch auch vorgesehen sein, dass an derselben Stelle eines Gliedes, d.h. an demselben ersten Teilflächenabschnitt beispielsweise zu verschiedenen Momenten unterschiedliche Arten von Eingabemitteln funktionsfähig dargestellt werden können. So kann an einer genauen Stelle des Gliedes, jeweils ein spezielles Eingabemittel angezeigt und funktionsfähig dargestellt werden, das von einem anderen speziellen Eingabemittel an derselben Stelle abgelöst wird. Welches Eingabemittel speziell dargestellt wird, kann sich beispielsweise aus dem Systemzustand des Roboterarms oder des Programmierzustands insbesondere der Robotersteuerung ergeben. Beispielsweise kann immer das voraussichtlich zweckmäßigste Eingabemittel angezeigt werden.

Die Konfigurationsvorrichtung kann beispielsweise ausgebildet sein zum dynamischen Beleuchten wahlweise eines ersten Teilflächenabschnitts der taktilen Sensorfläche oder eines vom ersten Teilflächenabschnitt verschiedenen zweiten Teilflächenabschnitts der taktilen Sensorfläche in Abhängigkeit der momentanen Gelenkstellungen des Roboterarms.

So kann beispielsweise das Eingabemittel in einer ersten Gelenkstellung an einer Oberseite eines Gliedes funktionsfähig dargestellt werden und im Falle eines Schwenkens dieses Gliedes um 180 Grad dieses Eingabemittel an demselben Glied jedoch auf einem gegenüberliegenden Teilflächenabschnitt dieses Gliedes als bisher funktionsfähig dargestellt werden, so dass auch bei einer um 180 Grad geschwenkten Orientierung des Gliedes dieses Eingabemittel weiterhin an der Oberseite funktionsfähig dargestellt wird.

Die Konfigurationsvorrichtung kann demgemäß ausgebildet sein, die Gestalt des optisch hervorgehobenen Teilflächenabschnitts der taktilen Sensorfläche beizubehalten und bei einer Änderung der momentanen Position und/oder Orientierung desjenigen Gliedes des Roboterarms, das die Mensch-Maschine-Schnittstelle aufweist, den optisch hervorgehobenen Teilflächenabschnitt der taktilen Sensorfläche derart dynamisch hinsichtlich dessen Position und/oder Orientierung anzupassen, dass ein durch das optische Hervorheben des Teilflächenabschnitts der taktilen Sensorfläche erzeugtes virtuelles Eingabemittel seine Position und/oder Orientierung im Raum beibehält.

Die Konfigurationsvorrichtung kann ausgebildet sein zum dynamischen Beleuchten wahlweise eines ersten Teilflächenabschnitts der taktilen Sensorfläche oder eines vom ersten Teilflächenabschnitt verschiedenen zweiten Teilflächenabschnitts der taktilen Sensorfläche in Abhängigkeit der Position einer die Mensch-Maschine-Schnittstelle bedienende Person relativ zum Roboterarm.

So kann beispielsweise auch bei gleichbleibenden Gelenkstellungen des Roboterarms es zweckmäßig sein, das Eingabemittel von einer Seite des jeweiligen Gliedes auf die gegenüberliegenden Seite des Gliedes zu verlegen, wenn eine Person d.h. beispielsweise ein Programmierer des Roboters seine Position von einer Seite des Roboterarms auf die andere Seite des Roboterarms wechselt.

Die taktile Sensorfläche des wenigstens einen Gliedes des Roboterarms, das die Mensch-Maschine-Schnittstelle aufweist, ist ausgebildet und eingerichtet zum Detektieren von unbeabsichtigten Kollisionen des Gliedes mit anderen Objekten, wobei jedoch derjenige Teilflächenabschnitt der taktilen Sensorfläche, der zur Bildung des Eingabemittels aktiviert ist, derart, dass bei einer Berührung dieses aktivierten Teilflächenabschnitts der taktilen Sensorfläche ein diesem Teilflächenabschnitt durch die Konfigurationsvorrichtung steuerungstechnisch zugeordnetes Signal erzeugt wird, für eine Detektion einer unbeabsichtigten Kollision deaktiviert ist.

So kann vermieden werden, dass eine beabsichtigte manuelle Eingabe an der Mensch-Maschine-Schnittstelle durch Tastendruck irrtümlicher Weise steuerungstechnisch als eine unbeabsichtigte Kollision aufgefasst wird.

Die taktile Sensorfläche des wenigstens einen Gliedes des Roboterarms, das die Mensch-Maschine-Schnittstelle aufweist, kann ausgebildet und eingerichtet sein zum Detektieren von unbeabsichtigten Kollisionen des Gliedes mit anderen Objekten und zu einem Kollisionsereignis nur dann ein die unbeabsichtigte Kollision kennzeichnendes erstes Signal erzeugt, wenn die Kollisionskraft einen vorgegebenen Druckkraftgrenzwert überschreitet, wobei derjenige Teilflächenabschnitt der taktilen Sensorfläche, der zur Bildung des Eingabemittels aktiviert ist, derart, dass bei einer Berührung dieses aktivierten Teilflächenabschnitts der taktilen Sensorfläche ein diesem Teilflächenabschnitt durch die Konfigurationsvorrichtung steuerungstechnisch zugeordnetes Signal erzeugt wird, nur dann ein eine Eingabe kennzeichnendes zweites Signal erzeugt, wenn die Eingabekraft unter dem vorgegebenen Druckkraftgrenzwert liegt.

Auch so kann vermieden werden, dass eine beabsichtigte manuelle Eingabe an der Mensch-Maschine-Schnittstelle durch Tastendruck irrtümlicher Weise steuerungstechnisch als eine unbeabsichtigte Kollision aufgefasst wird.

Alternativ oder ergänzend kann die taktile Sensorfläche des wenigstens einen Gliedes des Roboterarms, das die Mensch-Maschine-Schnittstelle aufweist, ausgebildet und eingerichtet sein ein Zustimmschaltmittel zu bilden, wobei derjenige Teilflächenabschnitt der taktilen Sensorfläche, der zur Bildung des Zustimmschaltmittels aktiviert ist, bei einer Berührung dieses aktivierten Teilflächenabschnitts der taktilen Sensorfläche ein diesem Teilflächenabschnitt durch die Konfigurationsvorrichtung steuerungstechnisch zugeordnetes Zustimm-Signal nur dann erzeugt, wenn die Eingabekraft unter einem vorgegebenen Höchst-Druckkraftgrenzwert liegt und über einem vorgegebenen Mindest-Druckkraftgrenzwert liegt.

Mechanische Zustimmschaltmittel als solches sind bei separaten Roboterbedienhandgeräten allgemein bekannt und mitunter auch aus sicherheitstechnischen Gründen vorgeschrieben. Derartige Zustimmschaltmittel weisen im Allgemeinen einen "Panikfunktion" auf, d.h. ein Bewegen des Roboterarms angesteuert durch das Roboterbedienhandgerät ist einerseits nur dann möglich, wenn das Zustimmschaltmittel manuell - mit einer gewissen Fingerkraft - betätigt ist. Ist das Zustimmschaltmittel nicht betätigt, können keine Bewegungen des Roboterarms erfolgen. Wird das mit einer gewissen Fingerkraft betätigte Zustimmschaltmittel jedoch über eine Höchstkraft hinaus gedrückt, beispielsweise in einer Schrecksituation, bei der ein Benutzer reflexartig die fingert verkrampft, wird das Zustimmschaltmittel sozusagen "überdrückt" und eine Freigabe des Roboterarms zum Bewegen wird sofort entzogen, d.h. das Zustimmschaltmittel schaltet ab. In der vorliegenden erfindungsgemäßen Ausführungsvariante wird insoweit durch die taktile Sensorfläche das bekannte mechanische Zustimmschaltmittel durch ein programmierbares, kraftsensorisches Touch-Zustimmschaltmittel ersetzt. Dabei ist von besonderem Vorteil, dass der Höchst-Druckkraftgrenzwert und/oder der Mindest-Druckkraftgrenzwert steuerungstechnisch, insbesondere programmiertechnisch, d.h. softwarekonfiguriert individuell einstellbar und/oder festlegbar sein kann.

Das optische Hervorheben des Teilflächenabschnitts der taktilen Sensorfläche und/oder das Aktivieren des optisch hervorgehobenen Teilflächenabschnitts der taktilen Sensorfläche können durch die Konfigurationsvorrichtung abschaltbar ausgebildet sein.

Das optische Hervorheben des Teilflächenabschnitts der taktilen Sensorfläche und/oder das Aktivieren des optisch hervorgehobenen Teilflächenabschnitts der taktilen Sensorfläche kann durch die Konfigurationsvorrichtung nach Ablauf einer vorgegebenen Zeitspanne automatisch abgeschaltet werden.

Die Konfigurationsvorrichtung kann hinsichtlich der Position, Orientierung, und/oder Gestalt des optisch hervorgehobenen Teilflächenabschnitts der taktilen Sensorfläche und der jeweiligen Art des zugeordneten Signals, das bei einer Berührung dieses Teilflächenabschnitts der taktilen Sensorfläche erzeugt wird, programmierbar sein.

Die Konfigurationsvorrichtung kann ausgebildet und eingerichtet sein zu Ihrer Programmierung mittels einer von der Konfigurationsvorrichtung separaten Steuervorrichtung, insbesondere mittels der Robotersteuerung des Roboterarms oder eines tragbaren Tablet-Computers.

Die Konfigurationsvorrichtung kann neben dem wenigstens einen Anzeigemittel zum Beleuchten eines bestimmten Teilflächenabschnitts der taktilen Sensorfläche des Eingabemittels wenigstens ein weiteres Anzeigemittel aufweisen, das lediglich zum Anzeigen von sonstigen Informationen ausgebildet ist, ohne dass ein bestimmter Teilflächenabschnitt der taktilen Sensorfläche zugeordnet wäre.

Demgemäß kann wenigstens ein Anzeigemittel der erfindungsgemäßen Mensch-Maschine-Schnittstelle auch als einfaches Anzeigemittel ohne Eingabefunktion ausgebildet sein, so dass die erfindungsgemäße Mensch-Maschine-Schnittstelle auch zusätzliche Anzeigen unabhängig von der Bildung eines Eingabemittels darstellen kann. Dies können beispielsweise auch Texte, Bilder oder Symbole sein, die erklärende oder hinweisende Funktionen besitzen, ohne dabei ein Eingabemittel zu bilden.

Die taktile Sensorfläche kann eine drucksensitive Haut und/oder kapazitive Näherungssensoren aufweisen. Die taktile Sensorfläche kann z.B. gemäß EP 2 528 234 B1 ausgebildet sein.

Das Anzeigemittel kann ein flexibles LED-Display aufweisen.

Die Erfindung ist im Folgenden, mitunter anders ausgedrückt, nochmals zusammenfassend dargestellt.

Durch das variable Einblenden von Bedieneinheiten, d.h. Eingabemitteln in einer aktiven Roboterhaut, d.h. der Oberfläche von Robotergliedern, können lokale Bereiche des Roboterarm mit einer Eingabefunktion belegt werden. Hierbei können diese lokalen Bereiche immer so gewählt werden, dass sie für den Anwender gut erreichbar sind. Somit ist die Zugänglichkeit der Bedienelemente immer gewährleistet.

Die optisch dargestellten Bedienelemente bzw. Eingabemittel können z.B. Tasten oder Schieber sein, die programmiert werden können. Dies kann bspw. ein Taster zum Teachen, ein ganzes Nummernfeld zur Eingabe von Ziffern sein. Ein Schieber kann beispielsweise so programmiert werden, dass bspw. eine mit der Hand zum manuellen Verstellen schlecht zugängliche Achse, d.h. Gelenk auf Tastendruck von einer anderen Stelle des Roboterarms aus angesteuert über Eingabemittel an einem insbesondere anderen Glied des Roboterarms bewegt werden kann.

Die Funktion des variablen Einblendens von programmierten Bedienelementen kann in Kombination mit taktilen Roboterhautsensoren, d.h. einer taktilen Sensorfläche eingesetzt werden. Hierbei wird ein Bereich der Roboterhaut für die Erkennung ungewollter Kollisionen ausgeblendet und stattdessen konkreten Funktionen zugeordnet. In diesem Fall kann eine ungewollte Kollision des Roboters jedoch nicht erkannt werden.

Die Funktion des variablen Einblendens von Bedienelementen in der Roboterhaut kann auch daher deaktivierbar sein. So kann sichergestellt werden, dass alle aktiven Bereiche der Roboterhaut ungewollte Kollisionen erkennen können.

Die Programmierung der variablen Bedienfelder kann über eine Software, bspw. in Form einer "App" erfolgen.

Zum Einblenden der programmierten Bedienfelder kann ein Tablet-PC benutzt werden.

Gegebenenfalls kann das eingeblendete Bedienfeld mit einer Zeitverzögerung versehen sein, so dass es nach einer programmierten Zeitspanne automatisch deaktiviert wird.

Beim Einsatz von kapazitiven Hautsensoren kann das Einblenden von Bedienelementen ebenfalls benutzt werden.

In die aktive Haut, die eine taktile oder kapazitive Haut sein kann, können beispielsweise LEDs integriert sein, die programmiert werden können. Programmieren heißt, dass einerseits die LEDs ein- und aufgeschaltet werden können, so dass beliebige Symbole dargestellt werden können und andererseits für den Bereich der Haut, in dem die LEDs ein Symbol darstellen, eine Funktion definiert wird, die ausgeführt werden kann, wenn auf diesen Hautbereich manuell gedrückt wird. Dabei kann ein Kraftschwellwert programmiert sein, die für das Erkennen einer Eingabe überschritten werden muss.

Mit der Erfindung wird die bisherige feste Ortsbindung von Eingabemitteln aufgelöst zugunsten einer dynamischen Anordnung von Eingabemitteln, d.h. Die LEDs können variabel an mehreren Stellen in der Haut integriert werden, d.h. "auftauchen". Die LEDs können beliebige Symbole (z.B. Taster, Schieber, Tastenfelder, etc.) in beliebiger Farbe darstellen. Die dargestellten Symbole können mit programmierbaren Funktionen verknüpft werden. Kraftschwellwerte können zum Erkennen einer Eingabe und/oder Aktivierung einer Funktion programmiert werden. Eine Aktivierung der Haut-Bedienfunktion kann über ein Bedienelement erfolgen, z.B. am Roboterfuß über ein mobiles Bediengerät.

Die Weichheit der Haut ist an dieser Stelle nicht gestört. Es kann eine Deaktivierung der Kollisionserkennung für den Bereich der Haut vorgesehen sein, der für eine programmierte Eingabe aktiv ist. Ein programmierbarer "Timeout" kann zur Deaktivierung der eingeblendeten Symbole und/ oder Funktionen verwendet werden.

Beispielhafte Möglichkeiten einer Realisierung sind:
Eine Hartschale kann eine Grundlage für die erfindungsgemäße Mensch-Maschine-Schnittstelle bilden. Auf die Hartschale kann eine aktive Haut (taktil oder kapazitiv) angebracht sein. Über die aktive Haut kann beispielsweise ein speziell angepasster Stoff mit integrierten programmierbaren LEDs gezogen und fixiert werden.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: einen beispielhaften Roboterarm mit mehreren Gelenken und diese Gelenke verbindenden Gliedern,
- Fig. 2: eine schematische Schnittdarstellung durch ein repräsentatives Glied eines Roboterarms mit einer erfindungsgemäßen Mensch-Maschine-Schnittstelle in einer ersten Gliedstellung, und
- Fig. 3: eine schematische Schnittdarstellung durch das Glied gemäß Fig. 2 in einer zweiten Gliedstellung.

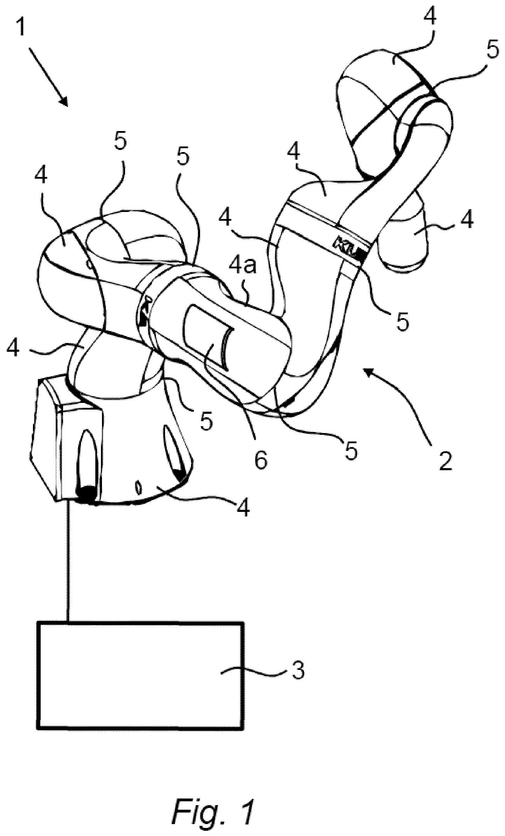

In der Fig. 1 ist ein repräsentatives Ausführungsbeispiel eines Roboter 1 gezeigt mit einem Roboterarm 2 und einer zughörigen Robotersteuerung 3. Der Roboterarm 2 weist mehrere Glieder 4 und die Glieder 4 gegeneinander verstellende Gelenke 5 auf. Jedes Gelenk 5 ist von jeweils einem Gelenkmotor des Roboterarms 2 angetrieben. Die Robotersteuerung 3 ist ausgebildet und eingerichtet, die Gelenkmotoren anzusteuern, um die Glieder 4 des Roboterarms 2 durch automatisches Verstellen der Gelenke 5 zu bewegen.

Demgemäß weist der Roboterarm 2 mehrere motorisch angetriebene Gelenke 5 und mehrere Glieder 4 auf, die jeweils zwei benachbarte Gelenke 5 dieser angetriebenen Gelenke 5 miteinander verbinden, wobei mindestens eines dieser Glieder 4 ein tragendes Strukturbauteil aufweist, das ausgebildet ist zur Übertragung von Kräften und/oder Momenten von einem benachbarten Gelenk 5.1 zu dem anderen benachbarten Gelenk 5.2. Im Falle des vorliegenden Ausführungsbeispiels ist ein Glied 4a der mehreren Glieder 4 mit einer Mensch-Maschine-Schnittstelle 6 ausgestattet. Generell können jedoch zwei, mehrere oder sogar alle Glieder 4 des Roboterarms 2 jeweils eine eigene Mensch-Maschine-Schnittstelle 6 aufweisen.

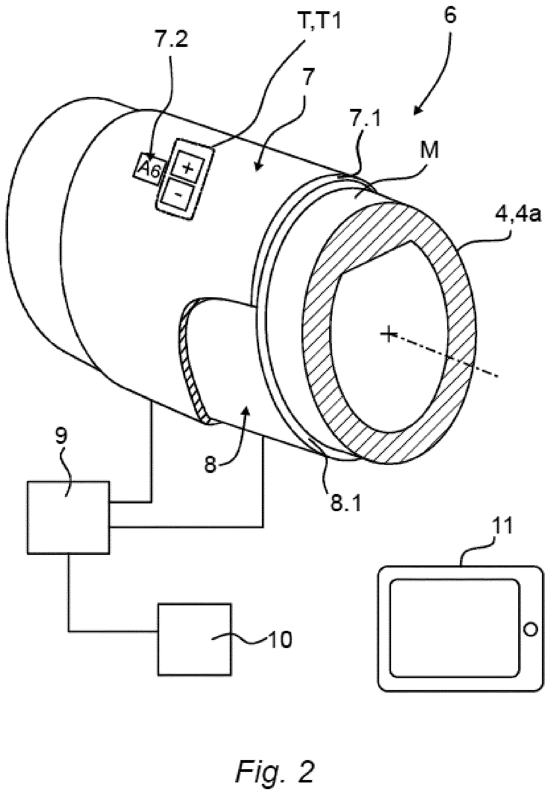

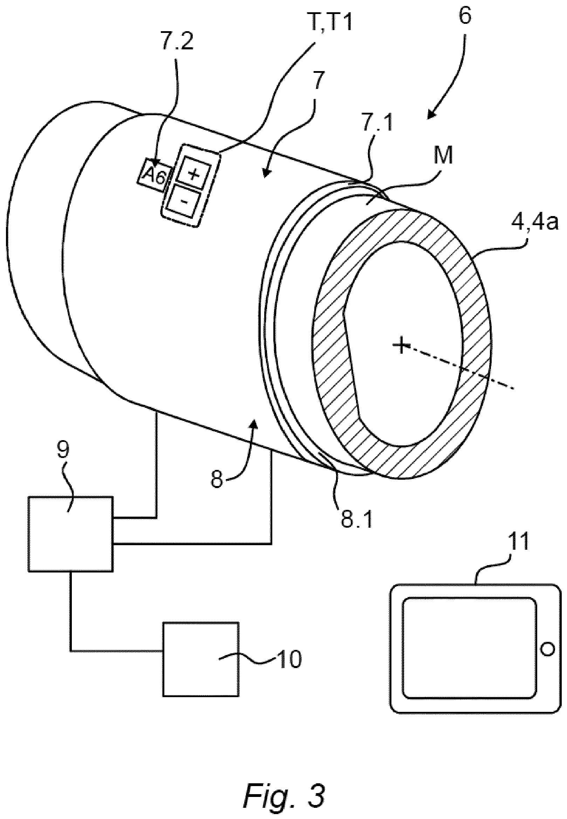

Wie in Fig.2 und Fig. 3 schematisch aufgezeigt ist, weist die Mensch-Maschine-Schnittstelle 6 wenigstens ein Anzeigemittel 7 auf, das ausgebildet ist, wenigstens einen Systemzustand des Roboterarms 2 und/oder einer mit dem Roboterarm 2 steuerungstechnisch verbundenen Steuervorrichtung 3 anzuzeigen. Die Mensch-Maschine-Schnittstelle 6 weist außerdem wenigstens ein Eingabemittel 8 auf, das ausgebildet ist, wenigstens eine manuelle Eingabe über die Mensch-Maschine-Schnittstelle 6 dem Roboterarm 2 und/oder der mit dem Roboterarm 2 steuerungstechnisch verbundenen Steuervorrichtung 3 zuzuführen.

Erfindungsgemäß umfasst das wenigstens eine Eingabemittel 8 eine auf einer äußeren Mantelwand M des Gliedes 4, 4a angeordnete taktile Sensorfläche 8.1 und das wenigstens eine Anzeigemittel 7 umfasst eine mit der taktilen Sensorfläche 8.1 überlagerte Anzeigefläche 7.1. Die Mensch-Maschine-Schnittstelle 6 weist eine das Anzeigemittel 7 und das Eingabemittel 8 ansteuernde Konfigurationsvorrichtung 9 auf, die eingerichtet ist, durch Beleuchten eines bestimmten Teilflächenabschnitts T der taktilen Sensorfläche 8.1 des Eingabemittels 8 mittels dem Anzeigemittel 7, einen aufgrund der überlagerten Anordnung von Anzeigefläche 7.1 und taktiler Sensorfläche 8.1 diesen Teilflächenabschnitt T der taktilen Sensorfläche 8.1 optisch hervorzuheben und diesen optisch hervorgehobenen Teilflächenabschnitt T der taktilen Sensorfläche 8.1 steuerungstechnisch separat zu aktivieren, derart, dass bei einer auf diesen aktivierten Teilflächenabschnitts T der taktilen Sensorfläche 8.1 ausgeübten Druckkraft ein diesem Teilflächenabschnitt T durch die Konfigurationsvorrichtung 9 steuerungstechnisch zugeordnetes Signal erzeugt wird und an eine Auswertevorrichtung 10 der Mensch-Maschine-Schnittstelle 6 zugeleitet wird.

Die Konfigurationsvorrichtung 9 ist im Falle des vorliegenden Ausführungsbeispiels ausgebildet zum dynamischen Beleuchten wahlweise eines ersten Teilflächenabschnitts T1 (Fig. 2) der taktilen Sensorfläche 8.1 oder eines vom ersten Teilflächenabschnitt T1 verschiedenen zweiten Teilflächenabschnitts T2 (Fig. 3) der taktilen Sensorfläche.

Die Konfigurationsvorrichtung 9 ist insbesondere ausgebildet den wahlweise ersten Teilflächenabschnitt T1 der taktilen Sensorfläche 8.1 oder den wahlweise zweiten Teilflächenabschnitt T2 der taktilen Sensorfläche 8.1 mit einer gleichartigen Darstellung zu beleuchten, bei dessen Berührung steuerungstechnisch das gleiche Signal erzeugt wird, um in beiden dynamischen Konfigurationen, wie in Fig. 2 und Fig. 3 aufgezeigt ist, dieselbe Funktion zu aktivieren.

Die Konfigurationsvorrichtung 9 ist insbesondere ausgebildet zum dynamischen Beleuchten wahlweise des ersten Teilflächenabschnitts T1 der taktilen Sensorfläche 8.1 oder des vom ersten Teilflächenabschnitt T1 verschiedenen zweiten Teilflächenabschnitts T2 der taktilen Sensorfläche 8.1 in Abhängigkeit der momentanen Gelenkstellungen des Roboterarms 2.

Die Konfigurationsvorrichtung 9 kann insbesondere ausgebildet sein, die Gestalt des optisch hervorgehobenen Teilflächenabschnitts T, T1, T2 der taktilen Sensorfläche 8.1 beizubehalten und bei einer Änderung der momentanen Position und/oder Orientierung desjenigen Gliedes 4a des Roboterarms 2, das die Mensch-Maschine-Schnittstelle 6 aufweist, den optisch hervorgehobenen Teilflächenabschnitt T, T1, T2 der taktilen Sensorfläche 8.1 derart dynamisch hinsichtlich dessen Position und/oder Orientierung anzupassen, dass ein durch das optische Hervorheben des Teilflächenabschnitts T, T1, T2 der taktilen Sensorfläche 8.1 erzeugtes virtuelles Eingabemittel 8 seine Position und/oder Orientierung im Raum beibehält.

Die taktile Sensorfläche 8.1 des wenigstens einen Gliedes 4a des Roboterarms 2, das die Mensch-Maschine-Schnittstelle 6 aufweist, ist auch ausgebildet und eingerichtet zum Detektieren von unbeabsichtigten Kollisionen des Gliedes 4a mit anderen Objekten, wobei jedoch derjenige Teilflächenabschnitt T, T1, T2 der taktilen Sensorfläche 8.1 , der zur Bildung des Eingabemittels 8 aktiviert ist, derart, dass bei einer Berührung dieses aktivierten Teilflächenabschnitts T, T1, T2 der taktilen Sensorfläche 8.1 ein diesem Teilflächenabschnitt T, T1, T2 durch die Konfigurationsvorrichtung 9 steuerungstechnisch zugeordnetes Signal erzeugt wird, für eine Detektion einer unbeabsichtigten Kollision deaktiviert ist.

Alternativ kann die taktile Sensorfläche 8.1 des wenigstens einen Gliedes 4a des Roboterarms 2, das die Mensch-Maschine-Schnittstelle 6 aufweist, ausgebildet und eingerichtet sein zum Detektieren von unbeabsichtigten Kollisionen des Gliedes 4a mit anderen Objekten und zu einem Kollisionsereignis nur dann ein die unbeabsichtigte Kollision kennzeichnendes erstes Signal erzeugt, wenn die Kollisionskraft einen vorgegebenen Druckkraftgrenzwert überschreitet, wobei derjenige Teilflächenabschnitt T, T1, T2 der taktilen Sensorfläche 8.1, der zur Bildung des Eingabemittels 8 aktiviert ist, derart, dass bei einer Berührung dieses aktivierten Teilflächenabschnitts T, T1, T2 der taktilen Sensorfläche 8.1 ein diesem Teilflächenabschnitt T, T1, T2 durch die Konfigurationsvorrichtung 9 steuerungstechnisch zugeordnetes Signal erzeugt wird, nur dann ein eine Eingabe kennzeichnendes zweites Signal erzeugt, wenn die Eingabekraft unter dem vorgegebenen Druckkraftgrenzwert liegt.

Das optische Hervorheben des Teilflächenabschnitts T, T1, T2 der taktilen Sensorfläche 8.1 und/oder das Aktivieren des optisch hervorgehobenen Teilflächenabschnitts T, T1, T2 der taktilen Sensorfläche 8.1 kann durch die Konfigurationsvorrichtung 9 abschaltbar ausgebildet sein.

Das optische Hervorheben des Teilflächenabschnitts T, T1, T2 der taktilen Sensorfläche 8.1 und/oder das Aktivieren des optisch hervorgehobenen Teilflächenabschnitts T, T1, T2 der taktilen Sensorfläche 8.1 kann durch die Konfigurationsvorrichtung 9 nach Ablauf einer vorgegebenen Zeitspanne automatisch abgeschaltet werden.

Die Konfigurationsvorrichtung 9 kann hinsichtlich der Position, Orientierung, und/oder Gestalt des optisch hervorgehobenen Teilflächenabschnitts T, T1, T2 der taktilen Sensorfläche 8.1 und der jeweiligen Art des zugeordneten Signals, das bei einer Berührung dieses Teilflächenabschnitts T, T1, T2 der taktilen Sensorfläche 8.1 erzeugt wird, programmierbar sein.

Die Konfigurationsvorrichtung 9 ist insbesondere ausgebildet und eingerichtet zur Programmierung mittels einer von der Konfigurationsvorrichtung 9 separaten Steuervorrichtung, insbesondere mittels der Robotersteuerung 3 des Roboterarms 2 oder eines tragbaren Tablet-Computers 11.

Die Konfigurationsvorrichtung 9 kann neben dem wenigstens einen Anzeigemittel 7 zum Beleuchten eines bestimmten Teilflächenabschnitts T, T1, T2 der taktilen Sensorfläche 8.1 des Eingabemittels 8 wenigstens ein weiteres Anzeigemittel 7.2 aufweist, das lediglich zum Anzeigen von sonstigen Informationen ausgebildet ist, ohne dass ein bestimmter Teilflächenabschnitt T, T1, T2 der taktilen Sensorfläche 8.1 zugeordnet wäre.

Im Falle des vorliegenden Ausführungsbeispiels ist die taktile Sensorfläche 8.1 eine drucksensitive Haut und kann ergänzend kapazitive Näherungssensoren aufweisen. Im Falle des vorliegenden Ausführungsbeispiels weist das Anzeigemittel 7 ein flexibles LED-Display auf.

## Patentansprüche

1. Roboterarm, aufweisend mehrere Gelenke (5) und mehrere Glieder (4), die jeweils zwei benachbarte Gelenke (5) miteinander verbinden, wobei mindestens eines dieser Glieder (4, 4a) eine Mensch-Maschine-Schnittstelle (6) aufweist, umfassend wenigstens ein Anzeigemittel (7), das ausgebildet ist, wenigstens einen Systemzustand des Roboterarms (2) und/oder einer mit dem Roboterarm (2) steuerungstechnisch verbundenen Steuervorrichtung (3) anzuzeigen und umfassend wenigstens ein Eingabemittel (8), das ausgebildet ist, wenigstens eine manuelle Eingabe über die Mensch-Maschine-Schnittstelle (6) dem Roboterarm (2) und/oder einer mit dem Roboterarm (2) steuerungstechnisch verbundenen Steuervorrichtung (3) zuzuführen, wobei das wenigstens eine Eingabemittel (8) eine auf einer äußeren Mantelwand (M) des Gliedes (4a) angeordnete taktile Sensorfläche (8.1) umfasst, das wenigstens eine Anzeigemittel (7) eine mit der taktilen Sensorfläche (8.1) überlagerte Anzeigefläche (7.1) umfasst und die Mensch-Maschine-Schnittstelle (6) eine das Anzeigemittel (7) und das Eingabemittel (8) ansteuernde Konfigurationsvorrichtung (9) aufweist, die eingerichtet ist, durch Beleuchten eines bestimmten Teilflächenabschnitts (T, T1, T2) der taktilen Sensorfläche (8.1) des Eingabemittels (8) mittels dem Anzeigemittel (7), einen aufgrund der überlagerten Anordnung von Anzeigefläche (7.1) und taktiler Sensorfläche (8.1) diesen Teilflächenabschnitt (T, T1, T2) der taktilen Sensorfläche (8.1) optisch hervorzuheben und diesen optisch hervorgehobenen Teilflächenabschnitt (T, T1, T2) der taktilen Sensorfläche (8.1) steuerungstechnisch separat zu aktivieren, derart, dass bei einer auf diesen aktivierten Teilflächenabschnitt (T, T1, T2) der taktilen Sensorfläche (8.1) ausgeübten Druckkraft ein diesem Teilflächenabschnitt (T, T1, T2) durch die Konfigurationsvorrichtung (9) steuerungstechnisch zugeordnetes Signal erzeugt wird und an eine Auswertevorrichtung (10) der Mensch-Maschine-Schnittstelle (6) zugeleitet wird, **dadurch gekennzeichnet, dass** die taktile Sensorfläche (8.1) des wenigstens einen Gliedes (4a) des Roboterarms (2), das die Mensch-Maschine-Schnittstelle (6) aufweist, ausgebildet und eingerichtet ist zum Detektieren von unbeabsichtigten Kollisionen des Gliedes (4a) mit anderen Objekten, wobei jedoch derjenige Teilflächenabschnitt (T, T1, T2) der taktilen Sensorfläche (8.1), der zur Bildung des Eingabemittels (8) aktiviert ist, derart, dass bei einer Berührung dieses aktivierten Teilflächenabschnitts (T, T1, T2) der taktilen Sensorfläche (8.1) ein diesem Teilflächenabschnitt (T, T1, T2) durch die Konfigurationsvorrichtung (9) steuerungstechnisch zugeordnetes Signal erzeugt wird, für eine Detektion einer unbeabsichtigten Kollision deaktiviert ist.

2. Roboterarm nach Anspruch 1, **dadurch gekennzeichnet, dass** die Konfigurationsvorrichtung (9) ausgebildet ist zum dynamischen Beleuchten wahlweise eines ersten Teilflächenabschnitts (T1) der taktilen Sensorfläche (8.1) oder eines vom ersten Teilflächenabschnitt (T1) verschiedenen zweiten Teilflächenabschnitts (T2) der taktilen Sensorfläche (8.1).

3. Roboterarm nach Anspruch 2, **dadurch gekennzeichnet, dass** die Konfigurationsvorrichtung (9) ausgebildet ist den wahlweise ersten Teilflächenabschnitt (T1) der taktilen Sensorfläche (8.1) oder den wahlweise zweiten Teilflächenabschnitt (T2) der taktilen Sensorfläche (8.1) mit einer gleichartigen Darstellung zu beleuchten, bei dessen Berührung steuerungstechnisch das gleiche Signal erzeugt wird, um in beiden dynamischen Konfigurationen dieselbe Funktion zu aktivieren.

4. Roboterarm nach Anspruch 2 oder 3, **dadurch gekennzeichnet, dass** die Konfigurationsvorrichtung (9) ausgebildet ist zum dynamischen Beleuchten wahlweise eines ersten Teilflächenabschnitts (T1) der taktilen Sensorfläche (8.1) oder eines vom ersten Teilflächenabschnitt (T1) verschiedenen zweiten Teilflächenabschnitts (T2) der taktilen Sensorfläche (8.1) in Abhängigkeit der momentanen Gelenkstellungen des Roboterarms (2).

5. Roboterarm nach Anspruch 4, **dadurch gekennzeichnet, dass** die Konfigurationsvorrichtung (9) ausgebildet ist, die Gestalt des optisch hervorgehobenen Teilflächenabschnitts (T, T1, T2) der taktilen Sensorfläche (8.1) beizubehalten und bei einer Änderung der momentanen Position und/oder Orientierung desjenigen Gliedes (4a) des Roboterarms (2), das die Mensch-Maschine-Schnittstelle (6) aufweist, den optisch hervorgehobenen Teilflächenabschnitt (T, T1, T2) der taktilen Sensorfläche (8.1) derart dynamisch hinsichtlich dessen Position und/oder Orientierung anzupassen, dass ein durch das optische Hervorheben des Teilflächenabschnitts (T, T1, T2) der taktilen Sensorfläche (8.1) erzeugtes virtuelles Eingabemittel (8) seine Position und/oder Orientierung im Raum beibehält.

6. Roboterarm nach einem der Ansprüche 2 bis 5, **dadurch gekennzeichnet, dass** die Konfigurationsvorrichtung (9) ausgebildet ist zum dynamischen Beleuchten wahlweise eines ersten Teilflächenabschnitts (T1) der taktilen Sensorfläche (8.1) oder eines vom ersten Teilflächenabschnitt (T1) verschiedenen zweiten Teilflächenabschnitts (T2) der taktilen Sensorfläche (8.1) in Abhängigkeit der Position einer die Mensch-Maschine-Schnittstelle (6) bedienende Person relativ zum Roboterarm (2).

7. Roboterarm nach einem der Ansprüche 1 bis 5, **dadurch gekennzeichnet, dass** die taktile Sensorfläche (8.1) des wenigstens einen Gliedes (4a) des Roboterarms (2), das die Mensch-Maschine-Schnittstelle (6) aufweist, ausgebildet und eingerichtet ist zum Detektieren von unbeabsichtigten Kollisionen des Gliedes (4a) mit anderen Objekten und zu einem Kollisionsereignis nur dann ein die unbeabsichtigte Kollision kennzeichnendes erstes Signal erzeugt, wenn die Kollisionskraft einen vorgegebenen Druckkraftgrenzwert überschreitet, wobei derjenige Teilflächenabschnitt (T, T1, T2) der taktilen Sensorfläche (8.1), der zur Bildung des Eingabemittels (8) aktiviert ist, derart, dass bei einer Berührung dieses aktivierten Teilflächenabschnitts (T, T1, T2) der taktilen Sensorfläche (8.1) ein diesem Teilflächenabschnitt (T, T1, T2) durch die Konfigurationsvorrichtung (9) steuerungstechnisch zugeordnetes Signal erzeugt wird, nur dann ein eine Eingabe kennzeichnendes zweites Signal erzeugt, wenn die Eingabekraft unter dem vorgegebenen Druckkraftgrenzwert liegt.

8. Roboterarm nach einem der Ansprüche 1 bis 7, **dadurch gekennzeichnet, dass** die taktile Sensorfläche (8.1) des wenigstens einen Gliedes (4a) des Roboterarms (2), das die Mensch-Maschine-Schnittstelle (6) aufweist, ausgebildet und eingerichtet ist ein Zustimmschaltmittel zu bilden, wobei derjenige Teilflächenabschnitt (T, T1, T2) der taktilen Sensorfläche (8.1), der zur Bildung des Zustimmschaltmittels aktiviert ist, bei einer Berührung dieses aktivierten Teilflächenabschnitts (T, T1, T2) der taktilen Sensorfläche (8.1) ein diesem Teilflächenabschnitt (T, T1, T2) durch die Konfigurationsvorrichtung (9) steuerungstechnisch zugeordnetes Zustimm-Signal nur dann erzeugt, wenn die Eingabekraft unter einem vorgegebenen Höchst-Druckkraftgrenzwert liegt und über einem vorgegebenen Mindest-Druckkraftgrenzwert liegt.

9. Roboterarm nach einem der Ansprüche 1 bis 8, **dadurch gekennzeichnet, dass** das optische Hervorheben des Teilflächenabschnitts (T, T1, T2) der taktilen Sensorfläche (8.1) und/oder das Aktivieren des optisch hervorgehobenen Teilflächenabschnitts (T, T1, T2) der taktilen Sensorfläche (8.1) durch die Konfigurationsvorrichtung (9) abschaltbar ausgebildet ist.

10. Roboterarm nach Anspruch 9, **dadurch gekennzeichnet, dass** das optische Hervorheben des Teilflächenabschnitts (T, T1, T2) der taktilen Sensorfläche (8.1) und/oder das Aktivieren des optisch hervorgehobenen Teilflächenabschnitts (T, T1, T2) der taktilen Sensorfläche (8.1) durch die Konfigurationsvorrichtung (9) nach Ablauf einer vorgegebenen Zeitspanne automatisch abgeschaltet wird.

11. Roboterarm nach einem der Ansprüche 1 bis 10, **dadurch gekennzeichnet, dass** die Konfigurationsvorrichtung (9) hinsichtlich der Position, Orientierung, und/oder Gestalt des optisch hervorgehobenen Teilflächenabschnitts (T, T1, T2) der taktilen Sensorfläche (8.1) und der jeweiligen Art des zugeordneten Signals, das bei einer Berührung dieses Teilflächenabschnitts (T, T1, T2) der taktilen Sensorfläche (8.1) erzeugt wird, programmierbar ist.

12. Roboterarm nach Anspruch 11, **dadurch gekennzeichnet, dass** die Konfigurationsvorrichtung (9) ausgebildet und eingerichtet ist zu Ihrer Programmierung mittels einer von der Konfigurationsvorrichtung (9) separaten Steuervorrichtung, insbesondere mittels der Robotersteuerung (3) des Roboterarms (2) oder eines tragbaren Tablet-Computers (11).

13. Roboterarm nach einem der Ansprüche 1 bis 12, **dadurch gekennzeichnet, dass** die Konfigurationsvorrichtung (9) neben dem wenigstens einen Anzeigemittel (7) zum Beleuchten eines bestimmten Teilflächenabschnitts (T, T1, T2) der taktilen Sensorfläche (8.1) des Eingabemittels (8) wenigstens ein weiteres Anzeigemittel (7.2) aufweist, das lediglich zum Anzeigen von sonstigen Informationen ausgebildet ist, ohne dass ein bestimmter Teilflächenabschnitt (T, T1, T2) der taktilen Sensorfläche (8.1) zugeordnet wäre.

14. Roboterarm nach einem der Ansprüche 1 bis 13, **dadurch gekennzeichnet, dass** die taktile Sensorfläche (8.1) eine drucksensitive Haut und/oder kapazitive Näherungssensoren aufweist.

15. Roboterarm nach einem der Ansprüche 1 bis 14, **dadurch gekennzeichnet, dass** das Anzeigemittel (7, 7.2) ein flexibles LED-Display aufweist.

## Claims

1. Robot arm, having a plurality of joints (5) and a plurality of links (4), which each connect two adjacent joints (5) to one another, wherein at least one of said links (4, 4a) has a human-machine interface (6), comprising at least one display means (7), which is designed to display at least one system state of the robot arm (2) and/or of a control device (3) connected in terms of control technology to the robot arm (2), and comprising at least one input means (8), which is designed to supply at least one manual input via the human-machine interface (6) to the robot arm (2) and/or to a control device (3) connected in terms of control technology to the robot arm (2), wherein the at least one input means (8) comprises a tactile sensor surface (8.1) arranged on an outer casing wall (M) of the link (4a), the at least one display means (7) comprises a display surface (7.1) superimposed on the tactile sensor surface (8.1) and the human-machine interface (6) has a configuration device (9), which actuates the display means (7) and the input means (8) and which is set up to visually highlight a certain partial surface section (T, T1, T2) of the tactile sensor surface (8.1) due to the superimposed arrangement of the display surface (7.1) and the tactile sensor surface (8.1) by illuminating said partial surface section (T, T1, T2) of the tactile sensor surface (8.1) of the input means (8) by means of the display means (7) and to activate said visually highlighted partial surface section (T, T1, T2) of the tactile sensor surface (8.1) separately in terms of control technology in such a way that, in the case of a compressive force exerted on said activated partial surface section (T, T1, T2) of the tactile sensor surface (8.1), a signal associated in terms of control technology with said partial surface section (T, T1, T2) by the configuration device (9) is generated and fed to an evaluation device (10) of the human-machine interface (6), **characterized in that** the tactile sensor surface (8.1) of the at least one link (4a) of the robot arm (2) that has the human-machine interface (6) is designed and set up to detect unintentional collisions of the link (4a) with other objects, wherein, however, that partial surface section (T, T1, T2) of the tactile sensor surface (8.1) that is activated to form the input means (8) in such a way that, when said activated partial surface section (T, T1, T2) of the tactile sensor surface (8.1) is touched, a signal assigned in terms of control technology to said partial surface section (T, T1, T2) by the configuration device (9) is generated, is deactivated for detection of an unintentional collision.

2. Robot arm according to Claim 1, **characterized in that** the configuration device (9) is designed to dynamically illuminate either a first partial surface section (T1) of the tactile sensor surface (8.1) or a second partial surface section (T2) of the tactile sensor surface (8.1) different from the first partial surface section (T1).

3. Robot arm according to Claim 2, **characterized in that** the configuration device (9) is designed to illuminate the optional first partial surface section (T1) of the tactile sensor surface (8.1) or the optional second partial surface section (T2) of the tactile sensor surface (8.1) with a similar representation, where, when touched, the same signal is generated in terms of control technology in order to activate the same function in both dynamic configurations.

4. Robot arm according to Claim 2 or 3, **characterized in that** the configuration device (9) is designed to dynamically illuminate either a first partial surface section (T1) of the tactile sensor surface (8.1) or a second partial surface section (T2) of the tactile sensor surface (8.1) different from the first partial surface section (T1) depending on the current joint positions of the robot arm (2).

5. Robot arm according to Claim 4, **characterized in that** the configuration device (9) is designed to maintain the shape of the visually highlighted partial surface section (T, T1, T2) of the tactile sensor surface (8.1) and, in the event of a change in the current position and/or orientation of that link (4a) of the robot arm (2) that has the human-machine interface (6), to dynamically adapt the visually highlighted partial surface section (T, T1, T2) of the tactile sensor surface (8.1) with regard to its position and/or orientation in such a way that a virtual input means (8) generated by the visual highlighting of the partial surface section (T, T1, T2) of the tactile sensor surface (8.1) maintains its position and/or orientation in space.

6. Robot arm according to any one of Claims 2 to 5, **characterized in that** the configuration device (9) is designed to dynamically illuminate either a first partial surface section (T1) of the tactile sensor surface (8.1) or a second partial surface section (T2) of the tactile sensor surface (8.1) different from the first partial surface section (T1) depending on the position of a person operating the human-machine interface (6) relative to the robot arm (2).

7. Robot arm according to any one of Claims 1 to 5, **characterized in that** the tactile sensor surface (8.1) of the at least one link (4a) of the robot arm (2) that has the human-machine interface (6) is designed and set up to detect unintentional collisions of the link (4a) with other objects and, in relation to a collision event, only generates a first signal characterizing the unintentional collision when the collision force exceeds a predetermined compressive force limit value, wherein that partial surface section (T, T1, T2) of the tactile sensor surface (8.1) that is activated to form the input means (8) in such a way that, when said activated partial surface section (T, T1, T2) of the tactile sensor surface (8.1) is touched, a signal assigned in terms of control technology to said partial surface section (T, T1, T2) by the configuration device (9) is generated, a second signal characterizing an input is generated only when the input force is below the predetermined compressive force limit value.

8. Robot arm according to any one of Claims 1 to 7, **characterized in that** the tactile sensor surface (8.1) of the at least one link (4a) of the robot arm (2) that has the human-machine interface (6) is designed and set up to form a consent switching means, wherein that partial surface section (T, T1, T2) of the tactile sensor surface (8.1) that is activated to form the consent switching means, when said activated partial surface section (T, T1, T2) of the tactile sensor surface (8.1) is touched, generates a consent signal assigned in terms of control technology to said partial surface section (T, T1, T2) by the configuration device (9) only when the input force is below a predetermined maximum compressive force limit value and above a predetermined minimum compressive force limit value.

9. Robot arm according to any one of Claims 1 to 8, **characterized in that** the visual highlighting of the partial surface section (T, T1, T2) of the tactile sensor surface (8.1) and/or the activation of the visually highlighted partial surface section (T, T1, T2) of the tactile sensor surface (8.1) is designed to be able to be switched off by the configuration device (9).

10. Robot arm according to Claim 9, **characterized in that** the visual highlighting of the partial surface section (T, T1, T2) of the tactile sensor surface (8.1) and/or the activation of the visually highlighted partial surface section (T, T1, T2) of the tactile sensor surface (8.1) is switched off automatically by the configuration device (9) after a predetermined period of time has elapsed.

11. Robot arm according to any one of Claims 1 to 10, **characterized in that** the configuration device (9) is programmable with regard to the position, orientation and/or shape of the visually highlighted partial surface section (T, T1, T2) of the tactile sensor surface (8.1) and the respective type of the associated signal that is generated when said partial surface section (T, T1, T2) of the tactile sensor surface (8.1) is touched.

12. Robot arm according to Claim 11, **characterized in that** the configuration device (9) is designed and set up for its programming by means of a control device separate from the configuration device (9), in particular by means of the robot controller (3) of the robot arm (2) or a portable tablet computer (11).

13. Robot arm according to any one of Claims 1 to 12, **characterized in that**, in addition to the at least one display means (7) for illuminating a specific partial surface section (T, T1, T2) of the tactile sensor surface (8.1) of the input means (8), the configuration device (9) has at least one further display means (7.2), which is designed only to display other information without a specific partial surface section (T, T1, T2) being associated with the tactile sensor surface (8.1).

14. Robot arm according to any one of Claims 1 to 13, **characterised in that** the tactile sensor surface (8.1) has a pressure-sensitive skin and/or capacitive proximity sensors.

15. Robot arm according to any one of Claims 1 to 14, **characterized in that** the display means (7, 7.2) has a flexible LED display.

## Revendications

1. Bras de robot, possédant plusieurs articulations (5) et plusieurs maillons (4) qui relient respectivement deux articulations (5) voisines entre elles, au moins l'un de ces maillons (4, 4a) possédant une interface homme-machine (6), comprenant au moins un moyen d'affichage (7) qui est configuré pour afficher au moins un état de système du bras de robot (2) et/ou d'un dispositif de commande (3) relié au bras de robot (2) par technique de commande et comprenant au moins un moyen d'entrée (8), qui est configuré pour acheminer au moins une entrée manuelle par le biais de l'interface homme-machine (6) au bras de robot (2) et/ou à un dispositif de commande (3) relié au bras de robot (2) par technique de commande, l'au moins un moyen d'entrée (8) comprenant une surface de détection tactile (8.1) disposée sur une paroi d'enveloppe (M) externe du membre (4a), l'au moins un moyen d'affichage (7) comprenant une surface d'affichage (7.1) superposée à la surface de détection tactile (8.1) et l'interface homme-machine (6) possédant un dispositif de configuration (9) qui commande le moyen d'affichage (7) et le moyen d'entrée (8), lequel est conçu pour, par l'éclairage d'une portion de surface partielle (T, T1, T2) déterminée de la surface de détection tactile (8.1) du moyen d'entrée (8) au moyen du moyen d'affichage (7), mettre en évidence visuellement l'une de cette portion de surface partielle (T, T1, T2) de la surface de détection tactile (8.1) du fait de la disposition superposée de la surface d'affichage (7.1) et de la surface de détection tactile (8.1) et activer séparément cette portion de surface partielle (T, T1, T2) mise en valeur visuellement de la surface de détection tactile (8.1) de telle sorte que, dans le cas d'une force de pression exercée sur cette portion de surface partielle (T, T1, T2) activée de la surface de détection tactile (8.1), un signal associé à cette portion de surface partielle (T, T1, T2) par technique de commande par le dispositif de configuration (9) est généré et transmis à un dispositif d'évaluation (10) de l'interface homme-machine (6), **caractérisé en ce que** la surface de détection tactile (8.1) de l'au moins un membre (4a) du bras de robot (2), qui possède l'interface homme-machine (6), est configurée et conçue pour détecter des collisions involontaires du membre (4a) avec d'autres objets, la portion de surface partielle (T, T1, T2) de la surface de détection tactile (8.1), qui est activée pour former le moyen d'entrée (8) telle sorte que, dans le cas d'un contact de cette portion de surface partielle activée (T, T1, T2) de la surface de détection tactile (8.1), un signal associé à cette portion de surface partielle (T, T1, T2) par technique de commande par le dispositif de configuration (9) est généré, étant cependant désactivée pour une détection d'une collision involontaire.

2. Bras de robot selon la revendication 1, **caractérisé en ce que** le dispositif de configuration (9) est configuré pour éclairer dynamiquement, au choix, une première portion de surface partielle (T1) de la surface de détection tactile (8.1) ou une deuxième portion de surface partielle (T2) de la surface de détection tactile (8.1) différente de la première portion de surface partielle (T1).

3. Bras de robot selon la revendication 2, **caractérisé en ce que** le dispositif de configuration (9) est configuré pour éclairer la première portion de surface partielle (T1) au choix de la surface de détection tactile (8.1) ou la deuxième portion de surface partielle (T2) au choix de la surface de détection tactile (8.1) avec une représentation similaire, au contact de laquelle le même signal est généré par technique de commande afin d'activer la même fonction dans les deux configurations dynamiques.

4. Bras de robot selon la revendication 2 ou 3, **caractérisé en ce que** le dispositif de configuration (9) est configuré pour éclairer dynamiquement, au choix, une première portion de surface partielle (T1) de la surface de détection tactile (8.1) ou une deuxième portion de surface partielle (T2) de la surface de détection tactile (8.1), différente de la première portion de surface partielle (T1), en fonction des positions d'articulation momentanées du bras de robot (2).

5. Bras de robot selon la revendication 4, **caractérisé en ce que** le dispositif de configuration (9) est configuré pour conserver la forme de la portion de surface partielle (T, T1, T2) mise en évidence visuellement de la surface de détection tactile (8.1) et, en cas de modification de la position et/ou de l'orientation momentanée du membre (4a) du bras de robot (2) qui possède l'interface homme-machine (6), pour adapter dynamiquement la portion de surface partielle (T, T1, T2) mise en évidence visuellement de la surface de détection tactile (8.1) en ce qui concerne sa position et/ou son orientation, de telle sorte qu'un moyen d'entrée (8) virtuel généré par la mise en évidence visuelle de la portion de surface partielle (T, T1, T2) de la surface de détection tactile (8.1) conserve sa position et/ou son orientation dans l'espace.

6. Bras de robot selon l'une des revendications 2 à 5, **caractérisé en ce que** le dispositif de configuration (9) est configuré pour éclairer dynamiquement, au choix, une première portion de surface partielle (T1) de la surface de détection tactile (8.1) ou une deuxième portion de surface partielle (T2) de la surface de détection tactile (8.1), différente de la première portion de surface partielle (T1), en fonction de la position d'une personne qui manipule l'interface homme-machine (6) par rapport au bras du robot (2).

7. Bras de robot selon l'une des revendications 1 à 5, **caractérisé en ce que** la surface de détection tactile (8.1) de l'au moins un membre (4a) du bras de robot (2), qui possède l'interface homme-machine (6), est configurée et conçue pour détecter des collisions involontaires du membre (4a) avec d'autres objets et, pour un événement de collision, ne génère un premier signal caractérisant la collision involontaire que si la force de collision dépasse une valeur limite de force de pression prédéfinie, la portion de surface partielle (T, T1, T2) de la surface de détection tactile (8.1), qui est activée pour former le moyen d'entrée (8) de telle sorte que, lors d'un contact avec cette portion de surface partielle activée (T, T1, T2) de la surface de détection tactile (8.1), un signal associé à cette portion de surface partielle (T, T1, T2) par technique de commande par le dispositif de configuration (9) est généré, ne générant un deuxième signal caractérisant une entrée que lorsque la force d'entrée est inférieure à la valeur limite de force de pression prédéfinie.

8. Bras de robot selon l'une des revendications 1 à 7, **caractérisé en ce que** la surface de détection tactile (8.1) de l'au moins un membre (4a) du bras de robot (2) qui possède l'interface homme-machine (6) est configurée et conçue pour former un moyen de commutation d'accord, la portion de surface partielle (T, T1, T2) de la surface de détection tactile (8.1), qui est activée pour former le moyen de commutation d'accord, générant, dans le cas d'un contact avec cette portion de surface partielle (T, T1, T2) activée de la surface de détection tactile (8.1), un signal d'accord associé à cette portion de surface partielle (T, T1, T2) par technique de commande par le dispositif de configuration (9) uniquement lorsque la force d'entrée est inférieure à une valeur limite de force de pression maximale prédéfinie et est supérieure à une valeur limite de force de pression minimale prédéfinie.

9. Bras de robot selon l'une des revendications 1 à 8, **caractérisé en ce que** la mise en évidence visuelle de la portion de surface partielle (T, T1, T2) de la surface de détection tactile (8.1) et/ou l'activation de la portion de surface partielle (T, T1, T2) mise en évidence visuellement de la surface de détection tactile (8.1) est réalisée de manière à pouvoir être désactivée par le dispositif de configuration (9).

10. Bras de robot selon la revendication 9, **caractérisé en ce que** la mise en évidence visuelle de la portion de surface partielle (T, T1, T2) de la surface de détection tactile (8.1) et/ou l'activation de la portion de surface partielle (T, T1, T2) mise en évidence visuellement de la surface de détection tactile (8.1) est désactivée automatiquement par le dispositif de configuration (9) après écoulement d'un intervalle de temps prédéfini.

11. Bras de robot selon l'une des revendications 1 à 10, **caractérisé en ce que** le dispositif de configuration (9) est programmable en ce qui concerne la position, l'orientation et/ou la forme de la portion de surface partielle (T, T1, T2) mise en évidence visuellement de la surface de détection tactile (8.1) et le type respectif du signal associé, qui est généré dans le cas d'un contact avec cette portion de surface partielle (T, T1, T2) de la surface de détection tactile (8.1), est programmable.

12. Bras de robot selon la revendication 11, **caractérisé en ce que** le dispositif de configuration (9) est configuré et conçu en vue de sa programmation au moyen d'un dispositif de commande séparé du dispositif de configuration (9), notamment au moyen du contrôleur de robot (3) du bras de robot (2) ou d'une tablette informatique portable (11).

13. Bras de robot selon l'une des revendications 1 à 12, **caractérisé en ce que** le dispositif de configuration (9) possède, en plus de l'au moins un moyen d'affichage (7) servant à éclairer une portion de surface partielle (T, T1, T2) déterminée de la surface de détection tactile (8.1) du moyen d'entrée (8), au moins un moyen d'affichage supplémentaire (7.2) qui est configuré uniquement pour afficher d'autres informations, sans qu'une portion de surface partielle (T, T1, T2) déterminée de la surface de détection tactile (8.1) soit associée.

14. Bras de robot selon l'une des revendications 1 à 13, **caractérisé en ce que** la surface de détection tactile (8.1) possède une peau sensible à la pression et/ou des capteurs de proximité capacitifs.

15. Bras de robot selon l'une des revendications 1 à 14, **caractérisé en ce que** le moyen d'affichage (7, 7.2) comprend un écran à LED flexible.
